(19) Europäisches Patentamt
European Patent Office
Office européen des brevets

(11) **EP 1 973 336 B1**

(12) **FASCICULE DE BREVET EUROPEEN**

(45) Date de publication et mention
de la délivrance du brevet:
**21.10.2009 Bulletin 2009/43**

(51) Int Cl.:
*H04N 1/62* (2006.01)  *G06T 7/40* (2006.01)
*G06T 5/00* (2006.01)

(21) Numéro de dépôt: **08102048.9**

(22) Date de dépôt: **27.02.2008**

(54) **Procédé de détection et de correction automatique des yeux rouges visibles sur une image**

Verfahren zur Erfassung und automatischen Korrektur von roten Augen auf Fotos

Method of automatic detection and correction of visible red eyes in a photograph

(84) Etats contractants désignés:
**DE ES GB IT**

(30) Priorité: **23.03.2007 FR 0753997**

(43) Date de publication de la demande:
**24.09.2008 Bulletin 2008/39**

(73) Titulaire: **SAGEM COMMUNICATIONS**
**92848 Rueil Malmaison Cedex (FR)**

(72) Inventeur: **Berger, Jérome**
**92400 Courbevoie (FR)**

(74) Mandataire: **Schmit, Christian Norbert Marie**
**SCHMIT CHRETIEN**
**8, place du Ponceau**
**95000 Cergy (FR)**

(56) Documents cités:
**EP-A- 1 734 475     US-A1- 2004 228 542**

• **CORCORAN P ET AL: "AUTOMATED IN-CAMERA DETECTION OF FLASH-EYE DEFECTS" IEEE TRANSACTIONS ON CONSUMER ELECTRONICS, IEEE SERVICE CENTER, NEW YORK, NY, US, vol. 51, no. 1, février 2005 (2005-02), pages 11-17, XP001240419 ISSN: 0098-3063**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE DE L'INVENTION

La présente invention a pour objet et un procédé de détection et de correction automatique des yeux rouges d'un individu visible sur une image. Un but essentiel de l'invention est de permettre le repérage, puis la correction, sur une personne apparaissant sur une image issue d'une photographie, d'au moins un oeil présentant une teinte rouge surprenante et peu naturelle au niveau de la pupille ; la correction apportée consistant notamment à remplacer ce rouge par une couleur plus naturelle.

ARRIERE-PLAN TECHNOLOGIQUE DE L'INVENTION

Dans le domaine de la photographie, numérique ou argentique, la prise d'images peut nécessiter, lorsque l'environnement est sombre, l'utilisation d'un flash. Or, comme cela est connu, la lumière du flash se réfléchit sur la rétine de l'oeil ce qui entraîne souvent l'apparition d'une teinte rouge surprenante et peu naturelle à l'emplacement de la pupille de l'oeil. Ce phénomène bien connu est appelé artefact des yeux rouges.

Il existe actuellement de nombreux systèmes qui tentent d'éviter ce phénomène des yeux rouges. La plupart de ces systèmes agissent sur la lumière émise par le flash, lors de la prise d'image. D'autres systèmes tentent de corriger la couleur rouge de la pupille de l'oeil avant l'impression de l'image. Ces systèmes sont généralement installés sur des ordinateurs reliés à des dispositifs d'impression d'images. Certains systèmes sont installés directement sur le dispositif d'impression d'images ; on parle alors de systèmes embarqués.

Certains de ces systèmes mettent en oeuvre un procédé qui nécessite une sélection, par l'utilisateur, de la zone dans laquelle se trouvent les yeux rouges à corriger. Un tel procédé n'est pas automatique. Il nécessite une attention et une intervention de l'utilisateur.

D'autres systèmes mettent en oeuvre une méthode de reconnaissance de la tête, automatique et transparente pour l'utilisateur. Cette méthode est basée sur un apprentissage de la tête. Ces méthodes d'apprentissage consistent à faire apprendre au système un grand nombre de têtes qu'il est ensuite capable de reconnaître. Une fois constituée une base d'apprentissage contenant un grand nombre de têtes, de formes et de types variés, on en extrait des caractéristiques intéressantes comme, par exemple, les projections de ces images de têtes dans des espaces vectoriels, sur des bases spécifiques comme les bases d'ondelettes ou les bases de type Haar. A partir de la très grande quantité d'informations ainsi récupérée, on extrait les informations les plus critiques, les plus discriminantes, celles qui décrivent le mieux une tête. Ces données ayant été extraites de la base d'apprentissage, on crée un classificateur qui permet de détecter une tête dans l'image, à plusieurs échelles possibles. Ce classificateur calcule les fonctions (par exemple les projections sur les vecteurs de la base) choisies comme principales et spécifie si une tête a bien été détectée dans l'image à traiter. Un exemple d'une telle méthode d'apprentissage des têtes est décrite dans le document US 04-0119851-A1.

Avec une telle méthode qui reconnaît une tête dans sa globalité, il est nécessaire de parcourir l'image et de vérifier à toutes les échelles possibles la présence d'une tête. Une telle méthode est donc très coûteuse en temps de calcul et en mémoire pour le stockage des données extraites de la base d'apprentissage. Or, la capacité de calcul d'un dispositif embarqué et la mémoire disponible sont relativement réduites par rapport à celles d'un ordinateur. En conséquence, la mise en oeuvre d'une méthode de détection de tête par apprentissage, dans un système embarqué, entraîne un temps de traitement de l'image très long.

Il existe également des systèmes mettant en oeuvre une méthode d'apprentissage des yeux. L'apprentissage des yeux est réalisé de façon globale, comme l'apprentissage de têtes décrit précédemment. Cette méthode présente donc les mêmes inconvénients que la méthode d'apprentissage de têtes.

Une autre méthode pour détecter la présence de yeux rouges sur une image est décrite dans la demande de brevet CA-2460179. Cette méthode consiste à détecter, sur l'image, les pixels de rouge saturé. Plus précisément, ce procédé permet de détecter tous les pixels de l'image qui ont une forte saturation et une forte variation de luminance, dans un espace colorimétrique de type HSV (Hue : teinte, Saturation and Value/Lightness). Lorsque des pixels à forte saturation et forte variation de luminance sont détectés, le procédé en déduit qu'il s'agit d'un rouge saturé correspondant à des yeux rouges. Cependant, ce procédé présente l'inconvénient de détecter trop souvent des pixels rouges pouvant correspondre à une pupille d'oeil rouge.

En effet, il existe, sur une image, de nombreux éléments pouvant être rouges, dans une couleur rouge saturée comme, par exemple, des lumières rouges, des vêtements rouges, une bouche, etc. Ce procédé détecte toutes ces zones rouges. De nombreux tests doivent ensuite être réalisés pour vérifier s'il s'agit d'un oeil ou non, ce qui entraîne de nombreux calculs. A défaut de ces tests, le procédé induit de nombreuses fausses détections et un temps de calcul pouvant être élevé pour des images contenant beaucoup de rouge.

Pour remédier à ces problèmes, on a récemment proposé un procédé, à savoir le brevet FR13724, qui permet, en travaillant sur une image de taille réelle :

- la détection d'une zone de peau,
- la réalisation d'un masque de peau,
- la recherche, dans le masque de peau, la présence éventuelle d'un oeil rouge de la façon suivante :

  - détection du blanc d'un oeil,
  - détection du rouge d'un oeil,
  - détection de l'iris d'un oeil.
  - reconnaissance de la forme ronde de la pupille d'un oeil,

- la correction de la couleur d'un oeil.

D'autre part, un brevet de l'état de la technique propose de créer, à partir d'une image de taille réelle, une carte de rougeur attribuant à chaque pixel une valeur plus ou moins grande selon sa couleur. Une segmentation par seuillage est alors effectuée sur cette carte.

Dans un autre brevet, on détecte des candidats d'oeil que l'on propose à l'utilisateur ; le rejet et/ou la validation de ces candidats y est donc manuelle, donc plus longue.

Dans l'état de la technique, on connaît l'enseignement du document technique CORCORAN P ET AL: "AUTOMATED IN-CAMERA DETECTION OF FLASH-EYE DEFECTS" IEEE TRANSACTIONS ON CONSUMER EMECTRONICS, IEEE SERVICE CENTER, NEW YORK, NY, US, vol.51 , no.1, février 2005, pages 11-17, XP001240419 ISSN : 0098-30-63, qui divulgue une méthode, pour un appareil photo, de détection de défauts sur un oeil flashé.

On connaît également l'enseignement du document technique EP-A-1 734 475 qui divulgue une méthode de détection d'une zone d'image présentant un ton faiblement coloré.

On connaît enfin l'enseignement du document technique US 2004/228542 A1 qui divulgue une méthode de modification de l'effet « yeux rouges » sur une image numérique.

Mais, pour toutes ces inventions de l'art antérieur, des problèmes subsistent :

- la segmentation de régions rouges par seuillage est imprécise,
- l'analyse de la forme des yeux potentiels est simpliste, s'appuyant sur les dimensions horizontale, verticale, et diagonale et sur la proportion de points rouges, pour vérifier qu'il ne s'agit pas d'un anneau,
- l'analyse de la couleur se fait généralement par comparaison avec des tables colorimétriques, ce qui peut être une cause d'erreurs.

DESCRIPTION GENERALE DE L'INVENTION

L'objet de l'invention propose une solution au problème qui vient d'être exposé. D'une façon générale, l'invention a pour objet un procédé permettant:

- de détecter, sur une image dont la taille est réduite pour des raisons de performances, de façon complètement automatique et transparente pour l'utilisateur, au moins un candidat d'oeil rouge ;
- d'analyser précisément la couleur de la peau d'un sujet au moyen de deux modèles de peau distincts ;
- de vérifier le caractère circulaire d'un candidat d'oeil rouge par le calcul de statistiques appliquées à ses coordonnées;
- de segmenter les régions d'une carte de rougeur au moyen d'un algorithme adéquat ;

Cette méthode nécessite relativement peu de calculs, ce qui lui confère une grande rapidité de calcul et une marge d'erreur faible.

Plus précisément, l'invention concerne un procédé de détection et de correction automatiques d'au moins un oeil rouge d'au moins un individu visible sur une image initiale, ladite détection consistant notamment à distinguer une zone de peau correspondant au visage, une zone d'absence de peau correspondant soit au blanc de l'oeil soit à l'iris et une zone de rouge correspondant à la pupille, le procédé comportant les étapes consistant à:

- réduire la taille de l'image initiale pour obtenir une image réduite ;
- détecter au moins un oeil rouge sur l'image réduite, par :

  - localisation d'au moins un candidat d'oeil rouge et obtention des coordonnées correspondantes,
  - validation ou rejet du candidat d'oeil rouge en fonction de critères de taille, de forme et de présence de peau à proximité moyenne et réduite dudit candidat ;

- convertir, le cas échéant, les coordonnées du candidat d'oeil rouge validé à l'échelle de l'image initiale ;
- corriger la rougeur du candidat d'oeil rouge validé en la remplaçant par une couleur appropriée pour obtenir une image finale,

**caractérisé en ce que**

- le critère de présence de peau à proximité moyenne du candidat d'oeil rouge utilise un premier modèle de peau vaste déterminant les zones correspondant à de la peau, et en ce que
- le critère de présence de peau à proximité réduite du candidat d'oeil rouge utilise un deuxième modèle de peau (MP2) restreint, obtenu par apprentissage des couleurs de la peau, déterminant le teint de la peau de l'individu.

Outre les caractéristiques principales qui d'être mentionnées dans le paragraphe précédent, le procédé selon l'invention peut présenter une ou plusieurs caractéristiques complémentaires décrites dans les revendications 2 à 17.

L'invention et ses différentes applications seront mieux comprises à la lecture de la description qui suit et à l'examen des figures qui l'accompagnent.

BREVE DESCRIPTION DES FIGURES

Celles-ci ne sont présentées qu'à titre indicatif et nullement limitatif de l'invention. Les figures montrent :

- à la figure 1, un diagramme décrivant le procédé selon l'invention,
- à la figure 2, une image de taille réelle sur laquelle un individu possède des yeux présentant une couleur rouge,
- à la figure 3, une image de taille réduite sur laquelle est représenté le même individu,
- à la figure 4, un diagramme décrivant l'étape de détection des yeux rouges selon l'invention,
- à la figure 5, un diagramme décrivant l'étape de correction des yeux rouges selon l'invention,
- à la figure 6, un diagramme décrivant la fusion des zones rouges,
- à la figure 7, un diagramme décrivant la validation des candidats d'oeil.
- à la figure 8, des régions contrôlées pour le critère de présence de peau autour de chaque candidat d'oeil.
- à la figure 9, un modèle de peau vaste représenté dans un espace de couleurs Cb/Cr.
- à la figure 10, une vue rapprochée d'un oeil sur lequel la correction selon l'invention est appliqué
- à la figure 11, une image similaire à celle de la figure 2, mais présentant des yeux corrigés par le procédé selon l'invention.

DESCRIPTION DETAILLEE DES FORMES DE REALISATION PREFEREES DE L'INVENTION

Les différents éléments apparaissant sur plusieurs figures auront gardé, sauf précision contraire, la même référence.

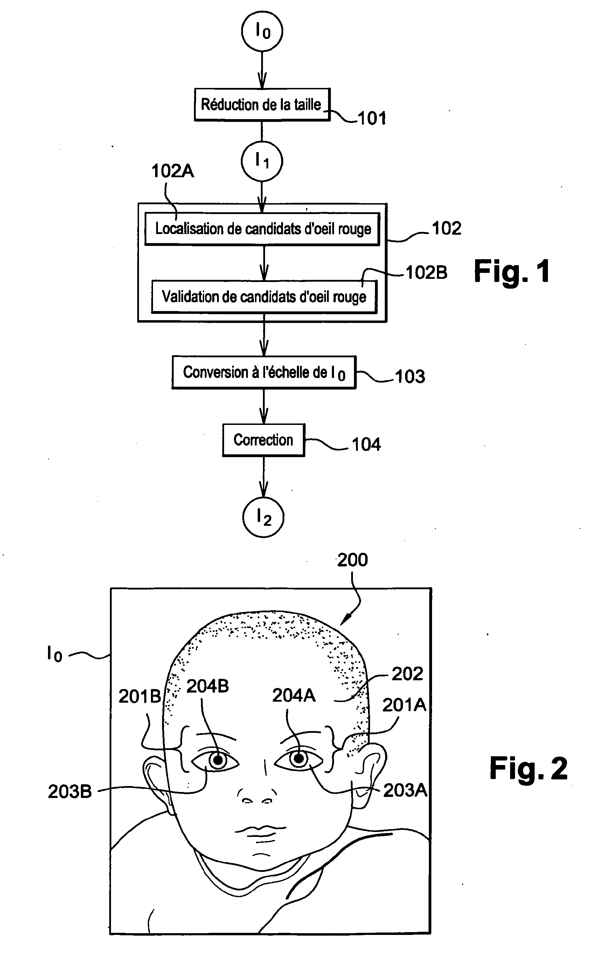

La figure 1 montre un diagramme représentant le procédé 100 de détection 102 et de correction 104 automatiques des yeux rouges selon l'invention. Le procédé 100 se décompose principalement selon les étapes ° suivantes :

- réduction 101 de la taille de l'image initiale 10 pour obtenir une image réduite 11 ;
- détection 102 d'au moins un oeil rouge sur l'image réduite 11, par :

  - localisation 102A de candidats d'oeil rouge et obtention des coordonnées x et y correspondantes,
  - validation/rejet 102B de candidats d'oeil rouge en fonction de critères de taille, de forme et de présence de peau à proximité moyenne et réduite dudit candidat ;

- conversion 103, le cas échéant, des coordonnées des candidats d'oeil rouge validés à l'échelle de l'image initiale ;
- correction 104 de la rougeur des candidats d'oeil rouge validés en la remplaçant par une couleur appropriée pour obtenir une image finale 12.

La figure 2 montre une image 10 de taille réelle sur laquelle un individu 200 possède un visage 202 dont les yeux 201 A et 201 B présentent chacun notamment une pupille 204A et 204B de couleur rouge, et un blanc d'oeil 203A et 203B.

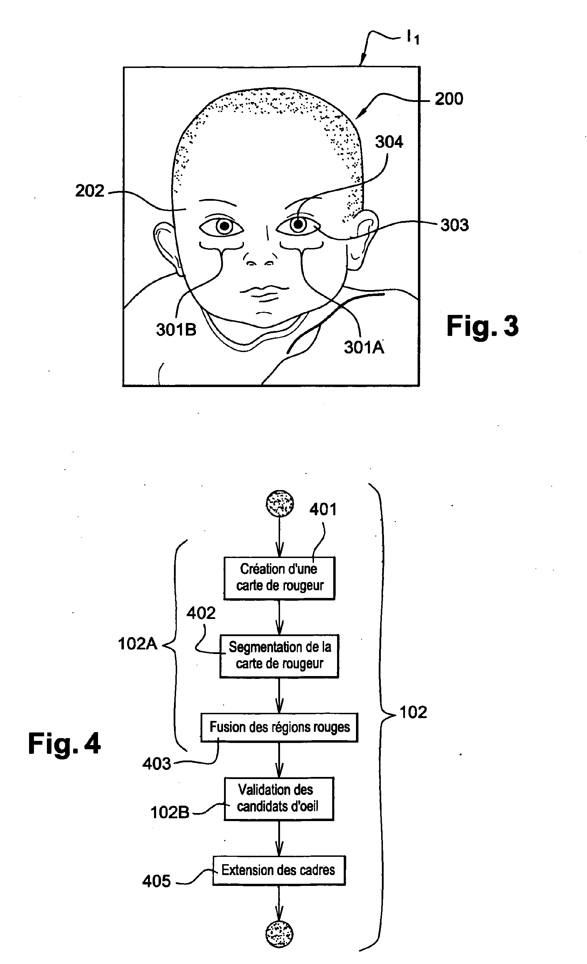

La figure 3 représente une image l1 de taille réduite sur laquelle est représenté le même individu 200. En effet, afin de détecter 102 des yeux rouges 201 A et 201B sur une image 10, le procédé 100 selon l'invention propose de commencer par réduire 101 la taille de ladite image pour obtenir une nouvelle image l1 dont les dimensions représentent environ 400 000 pixels, par exemple à plus ou moins 10%. Sur cette image I1, les yeux de l'individu 200 ne sont plus considérés en tant que tels, mais en tant que candidats d'oeil rouge 301A et 301B qui doivent subir, dans la suite du procédé selon l'invention, une validation ou un rejet 102B.

Pour des raisons de simplicité, on s'intéresse maintenant uniquement au candidat d'oeil rouge 301 A qui comporte une zone rouge 304 correspondant à la pupille 204A et une zone de blanc 303 correspondant au blanc d'oeil 203A.

La figure 4 montre un diagramme décrivant l'étape de détection 102 des yeux rouges selon l'invention. La localisation 102A d'au moins une région rouge R, correspondant à un candidat d'oeil rouge 301 A, comporte trois phases :

- création 401 d'une carte de rougeur,
- segmentation 402 de cette carte de rougeur,
- fusion 403 des régions rouges R.

En effet, dans un premier temps, la détection 102 consiste en la création 401 d'une carte de rougeur qui se présente sous la forme d'une image en niveaux de gris sur laquelle la valeur de chaque pixel dépend des valeurs des composantes rouge r, verte g et bleue b de l'image I1. Lesdites valeurs répondent à l'équation : $T = \max(r - g, 0)$.

Dans cet exemple de réalisation du procédé selon l'invention, la carte de rougeur est filtrée pour éliminer le bruit au moyen d'un filtre à rangement variable. Ce filtre agit en triant les valeurs de rougeur dans un voisinage de 3 X 3 pixels autour du pixel considéré dans un ordre croissant et en sélectionnant ensuite une des valeurs en fonction de leur disposition.

Dans un second temps, la carte de rougeur subit une segmentation 402 réalisée en utilisant un procédé existant. La segmentation 402 se décompose selon l'algorithme suivant :

- on appelle $\beta$ un critère d'assemblage de pixels : deux pixels p1 et p2 sont considérés comme appartenant à la même région si $\beta$ (p1,p2) est vrai, i.e. si la différence de rougeur entre p1 et p2 est en-dessous d'un certain seuil; dans cet exemple de réalisation du procédé selon l'invention, ce seuil est de : 14,7 ;
- pour chaque pixel de la carte de rougeur en partant du coin gauche supérieur de l'image I1 et en se déplaçant horizontalement, puis verticalement, contrôler le pixel directement à gauche et le pixel directement au-dessus. Trois cas sont alors possibles :

  - si $\beta$ est faux pour les deux pixels, alors on commence une nouvelle zone avec le pixel en cours ;
  - si $\beta$ est vrai pour un seul pixel, on considère le pixel en cours comme appartenant à la même région rouge R ;
  - si $\beta$ est vrai pour les deux, alors on distingue deux hypothèses:

    - ils appartiennent à des régions rouges R différentes. On marque ces régions en tant que régions équivalentes,
    - ils appartiennent à la même région R. On attribue au pixel en cours l'appartenance à cette région R.

La segmentation 402 aboutit à une carte de rougeur étiquetée et un tableau d'équivalence de régions R. Puisqu'on s'intéresse uniquement aux régions rouges R, on calcule la rougeur moyenne de chaque région R et on écarte celles dont la rougeur moyenne est en-dessous d'un seuil donné ; dans cet exemple de réalisation du procédé selon l'invention, ce seuil est de : 55.

La segmentation 402 réalisée a tendance à être excessive, en particulier dans les zones de transition. Aussi, certaines pupilles rouges 204A peuvent apparaître comme scindées en deux ou trois parties, notamment à cause d'un reflet d'un flash lumineux, et surtout à cause de la petite taille de l'image 11 sur laquelle la détection est appliquée. Pour remédier à ces problèmes, on effectue, ensuite, une fusion 203 des régions rouges qui sont à proximité réduite l'une de l'autre, par exemple une distance de deux ou trois pixels.

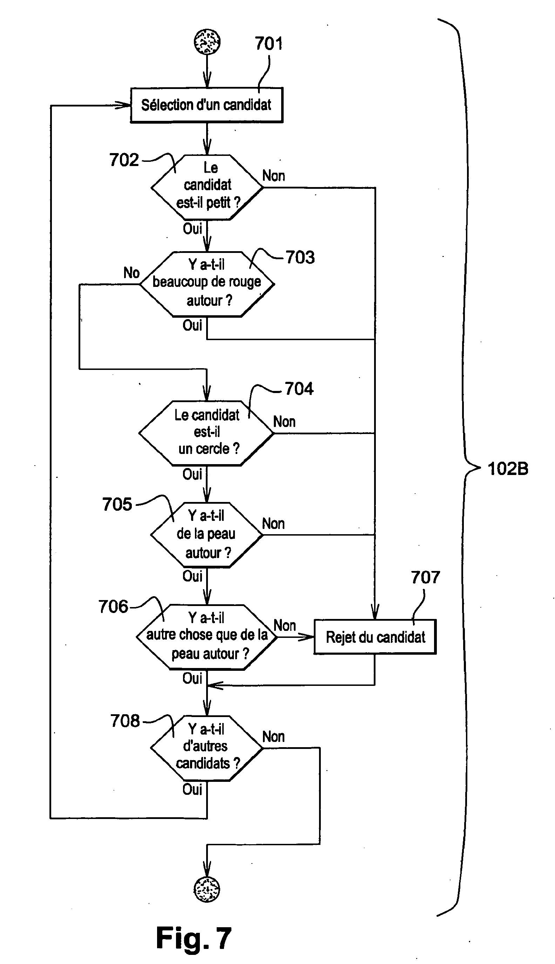

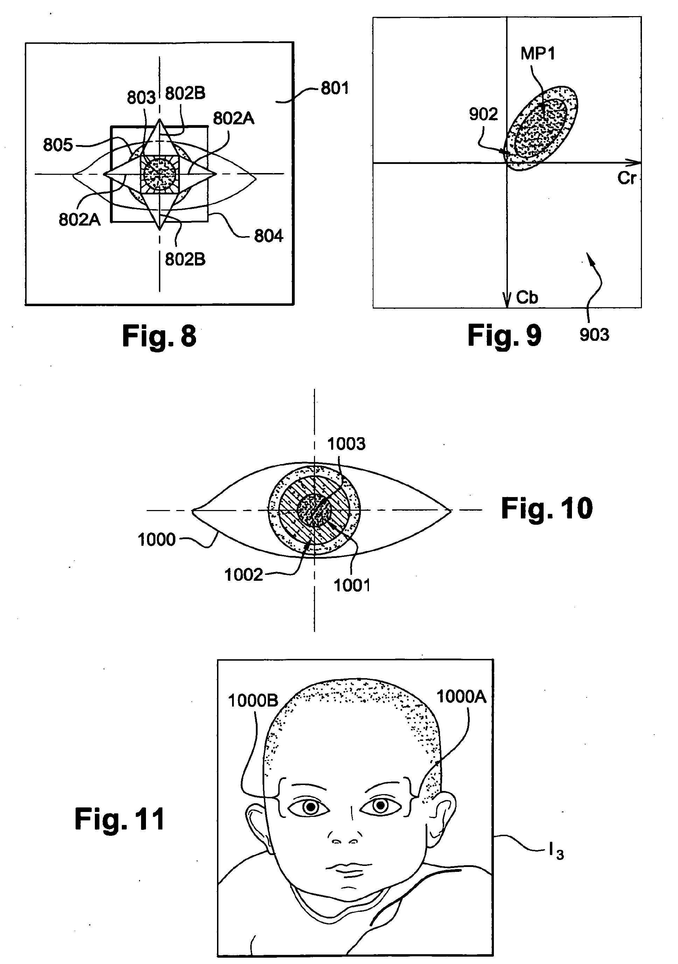

On marque alors les régions rouges R comme étant des régions équivalentes. C'est la fusion 403 des régions rouges R qui produit une série de candidats d'oeil rouge. Chaque candidat 301 A subit une validation ou un rejet 102B en fonction de différents critères décrits en même temps que la figure 7 et notamment au moyen d'un cadre rectangulaire 804 délimitant la zone du candidat d'oeil rouge 301 A ; un tel cadre 804 est décrit avec la figure 8.

Une fois que le candidat d'oeil rouge 301 A est validé, on réalise une extension 405 du cadre 804 pour appliquer la correction 104 audit candidat et obtenir une nouvelle image 12.

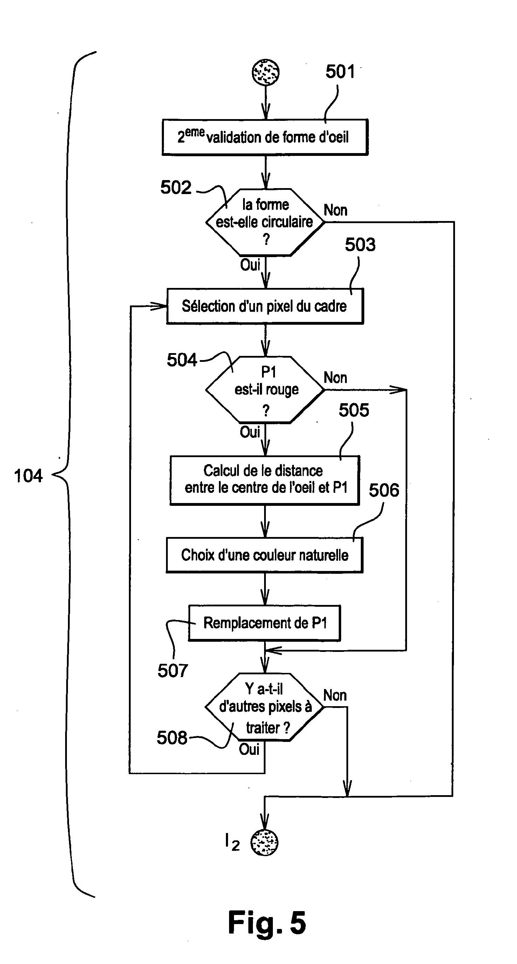

Pour les figures 5, 6 et 7, les losanges symbolisent des questions à réponse binaire, à savoir "oui" ou "non". Ce sont ces réponses qui déterminent le chemin à suivre pour la suite du procédé selon l'invention.

La figure 5 montre un diagramme décrivant l'étape de correction 104 des yeux rouges selon l'invention. La correction 104 aboutit à une image finale I2 de même taille que I0.

On commence la correction 104 en appliquant à l'image 12 une deuxième validation 501 de la forme du candidat d'oeil 301 A ; pour cela, il faut savoir quels pixels appartiennent au candidat 301 A. Comme on travaille maintenant sur une image de taille pleine, il est judicieux d'utiliser un unique seuil T de rougeur (r-g). Par conséquent, l'analyse de la forme est effectuée sur tous les pixels du cadre 804 dont la rougeur (r-g) est supérieure au seuil T. Dans cet exemple de réalisation du procédé selon l'invention, le seuil T=max(r-g) est fixé, pour chaque pixel à 48, sauf si la composante r est supérieure ou égale à 254. Dans ce cas, le pixel est considéré comme rouge qu'elle que soit la valeur de (r-g).

Dans le but de valider une deuxième fois la forme de l'oeil, le diagramme décrivant l'étape de correction 104 commence par la question 502 "la forme est-elle valide" :

- si la réponse est "non", la correction 104 est terminée,
- si la réponse est "oui", on s'intéresse à chaque pixel du cadre 804 délimitant la zone d'oeil. La question 504 "le pixel p1 est-il rouge" est alors posée :

  - si la réponse est "non", on passe au pixel p2 suivant pour lequel la même question est posée,
  - si la réponse est "oui", les opérations suivantes sont appliquées au pixel p1 considéré :

    - calcul 504 de la distance entre le centre de l'oeil et le pixel p1,
    - choix 505 d'une couleur naturelle de remplacement,
    - remplacement 506 du pixel considéré.

Dans les deux cas, la même question 504 est posée au pixel suivant, et ce jusqu'à ce que tous les pixels du cadre 804 délimitant la zone d'oeil soient traités, i.e. jusqu'à ce que la réponse à la question 508 "y a-t-il d'autres pixels à traiter" soit "non". En effet, c'est à ce moment précis que l'on obtient l'image finale 12.

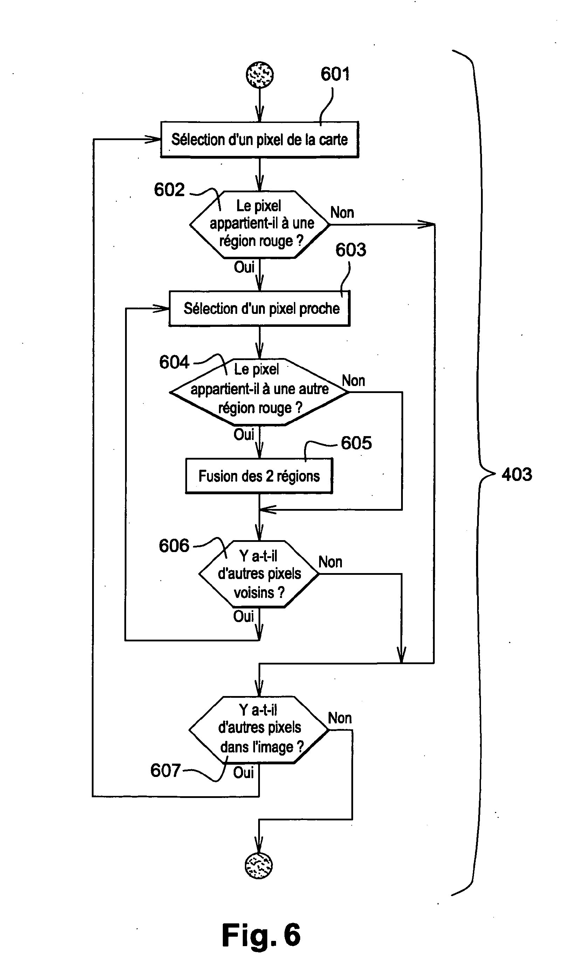

La figure 6 montre un diagramme décrivant la fusion 403 des zones rouges selon l'invention. La fusion 403 appliquée sur la carte de rougeur, une fois la segmentation effectuée, consiste notamment à marquer :

- chaque pixel p de l'image qui appartient à une région rouge,
- chaque pixel p" qui est compris dans une certaine périphérie de p, à savoir environ deux ou trois pixels, si p' appartient à une région rouge distincte de celle de p.

Plus précisément, on commence la fusion 403 en sélectionnant 601 un pixel p de la carte de rougeur, par exemple, celui qui est situé dans le coin supérieur gauche ; la question 602 "le pixel p appartient-il à une région rouge" est alors posée :

- si la réponse est "non", on passe au pixel suivant p' pour lequel la même question est posée, en se déplaçant par exemple horizontalement vers la droite puis verticalement vers le bas, et ce jusqu'à ce que tous les pixels de la carte de rougeur soient traités, i.e. jusqu'à ce que la réponse à la question 607 "y a-t-il d'autres pixels à traiter sur la carte ?" soit "non".
- si la réponse est "oui", on s'intéresse à chaque pixel p" situé dans une certaine périphérie proche de p, à savoir deux ou trois pixels ; la question 604 "le pixel p" appartient-il à une autre région rouge que celle de p ?" est alors posée :

  - si la réponse est "non", on passe au pixel suivant p"';
  - si la réponse est "oui", on réalise une fusion 605 de la région rouge de p et de la région rouge de p", puis on passe au pixel suivant p"'.

Dans les deux cas, la même question 606 "y a-t-il d'autres pixels voisins ?" est posée au pixel suivant p"', et ce jusqu'à ce que tous les pixels voisins de p soient traités, i.e. jusqu'à ce que la réponse à la question 506 soit "non". En effet, c'est à ce moment précis que la question 607 est posée de nouveau. La phase du procédé qui commence par la sélection 601 et qui finit par la question 506 est répétée jusqu'à ce que la réponse à la question 607 soit "non". En effet, c'est à ce moment précis que l'on obtient les candidats d'oeil rouge tels que le candidat 301A.
La figure 7 montre un diagramme décrivant l'étape de validation/rejet 102B des candidats. Les critères de validation d'un candidat d'oeil rouge 301 A sont les suivants :

- il ne doit pas être trop grand afin que le résultat obtenu après la correction soit esthétiquement recevable ; dans cet exemple de réalisation du procédé selon l'invention, la limite de taille est de 1000 pixels pour une image l1 de 400 000 pixels,
- il ne doit pas y avoir trop de rouge autour du candidat 301 A ; dans cet exemple de réalisation du procédé selon l'invention, la zone contrôlée fait 9 fois la taille de la zone rouge 304 du candidat 301 A, mais ne descend pas en-dessous de 8x8 pixels, même si ledit candidat 301 A est petit.

Ceci est contrôlé de deux façons :

- en comptant combien de pixels alentours possèdent une rougeur plus intense que la rougeur moyenne de la zone rouge 304. S'ils sont trop nombreux, le candidat 301 A est rejeté ; dans cet exemple de réalisation du procédé selon l'invention, le candidat 301 A est rejeté si on trouve un nombre de pixels rouges plus important que la moitié de la taille de sa zone rouge 304 dans le voisinage ;
- en calculant la rougeur moyenne des pixels avoisinant. Si elle est trop élevée, le candidat 301 A est rejeté ; dans cet exemple de réalisation du procédé selon l'invention, le candidat 301 A est rejeté si la rougeur moyenne dans le voisinage est supérieure à la fois à 55 et aux trois quarts de la rougeur moyenne dudit candidat ;
- la zone rouge 304 doit présenter une forme globalement circulaire. Cela est contrôlé en utilisant deux moments invariants décrits dans le paragraphe suivant ;
- il doit y avoir de la peau quelque part autour de l'oeil, à proximité moyenne de la pupille ;
- Il doit y avoir une zone qui n'est clairement pas de la peau à l'intérieur de la pupille, i.e. l'iris et le blanc de l'oeil.

Plus précisément, on commence décrivant l'étape de validation/rejet 102B du candidat d'oeil rouge 301 A en sélectionnant 701 un candidat de la carte de rougeur ; la question 702 "le candidat est-il petit ?" est alors posée :

- si la réponse est "non", le candidat est rejeté 707.
- si la réponse est "oui", alors la question 703 "y a-t-il beaucoup de rouge autour ?" est posée ; si la réponse est :

  - "oui", alors le candidat est rejeté 707,
  - "non", alors la question 704 "le candidat est-il un cercle ?" est posée; si la réponse est :

    - "non", alors le candidat est rejeté 707,
    - "oui", alors la question 705 "y a-t-il de peau autour?" est posée; si la réponse est :

      - "non", alors le candidat est rejeté 707,
      - "oui", alors la question 706 "y a-t-il autre chose que de la peau autour ?" est posée ; si la réponse est :

        - "non", alors le candidat est rejeté 707,
        - "oui", alors on passe à la question suivante.

Dans les deux cas, on finit par poser la question 708 "y a-t-il d'autres candidats ?" ; on répète la phase du procédé qui commence par la sélection 601 d'un candidat et qui finit par la question 706, et ce jusqu'à ce que la réponse à la question 708 soit "non", i.e. jusqu'à ce que tous les candidats soient validés ou rejetés.

Le critère de forme utilisé à l'étape 704 pour la validation d'un candidat d'oeil rouge est déterminé au moyen de moments invariants selon la méthode décrite de manière complète et précise dans le document « M.-K. Hu - Visual Pattern Recognition by Moment Invariants - in IRE Transactions on Information Theory, 1962 ».

Certaines statistiques de la région rouge R sont indépendantes de la position, de l'orientation et de la taille de R, mais dépendent uniquement de sa forme.

Les statistiques les plus simples pouvant être calculées pour une région R et utilisées pour caractériser sa forme sont les moments. Ils dépendent de la position, de la rotation et de la taille de la région rouge R, mais ils peuvent être utilisés pour calculer les valeurs qui n'en dépendent pas. Connaissant deux entiers positifs p et q, on peut définir le moment d'ordre (p,q) de R comme suit :

$$m_{pq} = \sum_{(x,y) \in R} x^p y^q$$

Une valeur particulière $m_{00}$ donne la taille de la région R et peut être utilisée pour créer des valeurs qui ne dépendent pas de la taille de la région considérée. Deux autres moments ($m_{10}$ and $m_{01}$) donnent sa position et peuvent être utilisés de façon similaire pour obtenir une indépendance en translation.

Les moments centraux $\mu_{pq}$ sont définis comme suit:

$$\mu_{pq} = \sum_{(x,y)\in R} (x - \bar{x})^p (y - \bar{y})^q$$

où $\bar{x} = m_{10}/m_{00}$ est la valeur moyenne de x et $\bar{y} = m_{01}/m_{00}$ est la valeur moyenne de y.

Une propriété importante des moments centraux est qu'ils sont indépendants de la position de la région R dans l'image. Cette indépendance permet d'utiliser des nombres entiers tout en limitant les risques de débordement : lorsqu'on calcule les moments invariants pour un candidat d'oeil rouge 301 A, l'origine du système de coordonnées ou repère est placée au centre du cadre délimitant la zone du candidat considéré. Cela implique deux effets :

- Cela minimise les valeurs absolues des coordonnées;
- Cela introduit des valeurs à la fois positives et négatives, qui leur fournissent une chance de s'éliminer mutuellement quand elles sont ajoutées ensemble.

Si $\mu = m_{00}$, alors les moments centraux peuvent être calculés facilement à partir des moments ordinaires. Les équations suivantes fournissent les relations existantes entre les moments et les moments centraux :

- 

$$\mu_{20} = m_{20} - \mu\bar{x}^2;$$

- 

$$\mu_{11} = m_{11} - \mu\bar{x}\bar{y};$$

- 

$$\mu_{02} = m_{02} - \mu\bar{y}^2.$$

Les moments centraux peuvent être rendus indépendants de la taille de la région R si on les remplace par les valeurs suivantes :

$$\mu'_{pq} = \frac{\mu_{pq}}{\mu^{\frac{p+q+2}{2}}}$$

A partir de ces moments invariants, on peut créer plusieurs quantités indépendantes de la taille, de la position et de l'orientation de la région rouge R. Pour la détection des yeux rouges, on utilise les deux invariants suivants :

- 

$$X = \mu'_{20} + \mu'_{02}$$

- 

$$Y = (\mu'_{20} - \mu'_{02})^2 + 4\mu'^2_{11}$$

Pour des raisons de performance et de précision, seulement le premier X est utilisé pour valider les candidats d'oeil rouge au cours de la détection des yeux rouges. Cependant, les deux sont utilisés pour valider de nouveau les candidats d'oeil rouge, mais cette fois-ci sur une image de taille pleine.

L'expérimentation a montré que les seuils suivants semblent caractériser la forme de la pupille d'un oeil rouge :

- X < 0.25 puisque, la précision est souvent trop faible au cours de la détection sur l'image réduite 11, ce seuil est élevé à 0.3 pour éviter le rejet des petits yeux dont la forme ne peut être calculée précisément.
- Y < 0.01

La figure 8 représente les régions contrôlées pour le critère de présence de peau 705 et 706 autour de chaque candidat d'oeil rouge 301 A. Dans cet exemple de réalisation du procédé selon l'invention, la zone rectangulaire 801, analysée pour chercher de la peau, possède des dimensions neuf fois plus grandes que celles de la zone rouge 304 du candidat d'oeil rouge 301 A dans les deux directions. Le trou situé au milieu de cette zone 801 est un cadre 804 délimitant la zone du candidat d'oeil ; dans cet exemple de réalisation du procédé selon l'invention, le cadre 804 possède des dimensions trois fois plus grandes que la zone rouge 304 dans les deux directions.

La zone rectangulaire 801 doit contenir une majorité de peau ; alors que les zones triangulaires 802 doivent en contenir le moins possible.

Dans un premier temps, la zone rectangulaire 801 est analysée en utilisant un premier modèle de peau vaste MP1 qui reconnaît un maximum de teints de peau différents. La moyenne des probabilités que chaque pixel soit de la peau est alors calculée ; deux cas sont alors possibles :

- si cette moyenne est inférieur à un seuil donné, le candidat d'oeil est rejeté 707 ; dans cet exemple de réalisation du procédé selon l'invention, la probabilité moyenne qu'un pixel soit de la peau dans la zone rectangulaire 801 doit être supérieure à 0,66 ;
- si cette moyenne est supérieure à un seuil donné, le candidat 301 A passe à la phase de validation 102B suivante.

Par la même occasion, les couleurs observées et pondérées par la probabilité qu'elles soient de la peau, sont utilisées pour créer un deuxième modèle de peau plus restreint MP2 correspondant précisément au teint de peau du sujet étudié et aux conditions d'éclairage.

Dans un second temps, les paires de triangles 802A et 802B, situées en périphérie de la pupille circulaire 204, sont analysées à tour de rôle en utilisant le deuxième modèle de peau ; deux cas sont alors possibles :

- si les deux paires de triangles 802 contiennent trop de peau, le candidat d'oeil est rejeté ;
- si au moins une paire de triangles 802A ou 802B ne contient pas trop de peau, une minorité par rapport au reste des pixel des triangles, alors le candidat est conservé.

Ceci s'explique par le fait que, en fonction de l'orientation de l'image, l'une ou l'autre paire de triangles 802A et 802B doit être incluse presque entièrement dans l'iris circulaire 805 et le blanc d'oeil 303 qui doivent avoir une couleur significativement différente de la peau alentour représentée par le modèle MP2.

Dans cet exemple de réalisation du procédé selon l'invention, les paires de triangles 802A et 802B présentent les caractéristiques suivantes :

- la base d'un triangle est écartée du bord de la zone rouge 304 d'une distance égale à 1/8 du diamètre de cette zone ;
- la hauteur d'un triangle est égale à la longueur de sa base.

Notons que le modèle de peau original est décrit dans le document « R.-L. Hsu, M. Abdel-Mottaleb & A. K. Jain - Face Détection in Color Images - in IEEE Transactions, vol. 24, 696-706, 2002 ».

La figure 9 représente le modèle de peau vaste MP1 représenté dans un espace de couleurs Cb/Cr. Le modèle de peau vaste MP1 utilisé sur la zone rectangulaire 801 est une ellipse 901 dans l'espace de couleur Cb/Cr. Selon la couleur observée dans la zone 801, différents cas sont possibles :

- si la couleur observée se situe dans l'ellipse 901, elle est considérée comme étant la couleur de la peau du sujet étudié,
- si la couleur observée se situe hors d'une deuxième ellipse 902 dont la superficie est 40% plus grande que celle de la première ellipse 901, i.e. dans une zone 803, alors ladite couleur est considérée comme n'étant pas la couleur de la peau du sujet étudié,
- si la couleur observée se situe entre l'ellipse 901 et l'ellipse 902, une probabilité est calculée en fonction de la distance entre ladite couleur et chaque ellipse 901 et 902.

Cependant, dans le but de réduire la quantité de calculs par rapport au document de référence, la dépendance à une luminance Y est simplifiée ; deux cas se présentent alors:

- si Y est au-dessus d'un certain seuil, alors la probabilité d'avoir de la peau est donnée directement par le modèle Cb/Cr,
- si Y est en-dessous du même seuil, alors la probabilité donnée par le modèle Cb/Cr est multipliée par un facteur dépendant de Y, de manière à ce que les zones très sombres aient une probabilité très faible, qu'elle que soit leur couleur.

Pendant que la zone rectangulaire 801 est contrôlée, des statistiques sont collectées à partir des valeurs de Cb/Cr pour les pixels de peau. Plus précisément :

- *Cb* et *Cr* sont les valeurs moyennes de Cb et Cr,

- $\Sigma^2_{Cb}$ et $\Sigma^2_{Cr}$ sont les variances de Cb et Cr.

Ces statistiques sont pondérées par la probabilité que la couleur soit de la peau. Par exemple :

$$\overline{Cb} = \frac{\sum_{\mathbf{x}} Cb(\mathbf{x}) \cdot \mathrm{p}(\mathbf{x})}{\sum_{\mathbf{x}} \mathrm{p}(\mathbf{x})}$$

Ces valeurs nous permettent de créer le modèle de peau restreint, que nous utilisons en calculant les variances de Cb et Cr en relation, respectivement avec leur *Cb* et *Cr* : $\Sigma_x (Cb(x) - Cb)^2$ et $\Sigma_x (Cr(x) - CrCr)^2$

Si suffisamment de pixels dans la zone 802 ne sont pas de la peau, au moins un d'entre eux doit être nettement plus grand que la variance correspondante, à savoir $\Sigma^2_{Cb}$ ou $\Sigma^2_{Cr}$..

En pratique, on utilise un seuil adaptable basé sur la taille de la pupille:

- Si la pupille est petite, alors on utilise un seuil bas. La raison est que si l'oeil est petit, la zone d'analyse est petite et risque d'être affectée par une fuite de couleur due à la compression en .JPEG, ou aux pixels de peau placés au bord de ladite zone. De plus, si le candidat est petit, une mauvaise détection ne dégradera pas trop la qualité de l'image.
- Si la pupille est grande, alors on utilise un seuil élevé, puisque l'iris et le blanc de l'oeil doivent être grands et clairement visibles.

Par conséquent, si T est le seuil adapté pour le candidat 301 A, celui-ci sera considéré comme un oeil 201 A si au moins un des suivants est vrai dans l'une des paires de triangles 802A ou 802B.

$$\sum_{\mathbf{x}} \left( Cb(\mathbf{x}) - \overline{Cb} \right)^2 > \tau \times \Sigma^2_{Cb} \ \text{or} \ \sum_{\mathbf{x}} \left( Cr(\mathbf{x}) - \overline{Cr} \right)^2 > \tau \times \Sigma^2_{Cr}$$

La figure 10 représente une vue rapprochée d'un oeil 1000 sur lequel la correction 104 selon l'invention est appliquée. On peut y distinguer :

- les pixels dans la zone 1001 qui sont complètement corrigés,
- les pixels dans la zone 1002 qui sont en partie corrigés en fonction de leur distance par rapport au centre 1003 de l'oeil.

En effet, une fois que l'oeil est validé, i.e. que la forme du candidat d'oeil rouge 301 A est validé une deuxième fois, il faut remplacer la couleur rouge de la zone 304 par une autre couleur. Théoriquement, cela devrait être du noir. Cependant, remplacer tous les pixels rouges par du noir absolu produit une impression artificielle, en particulier près des bords. Par conséquent, il faut remplacer par une couleur plus ou moins grise sélectionnée en fonction de la couleur d'origine et de la distance par rapport au centre 1001 de l'oeil. Ces précautions assurent une transition douce entre la pupille sombre de la zone 1001 et les pixels alentours de la zone 1002.

La couleur de remplacement pour un pixel donné est fournie par la méthode suivante :

- Choisir une valeur de gris de substitution γ en fonction de la couleur du pixel considéré. Puisque l'effet "yeux rouges" exagère généralement la composante rouge, nous définirons cette valeur de gris comme la moyenne des composantes verte g et bleue b : γ= (b+g)/2. La correction complète 104 remplace les trois composantes de couleur r,g et b par γ.
- Calculer un premier facteur de pondération λr en fonction de la nature du pixel :

$$\lambda_r = \begin{cases} 0 & \text{if } r - g < r_0; \\ 1 & \text{if } r - g > r_1; \\ \frac{(r-g) - r_0}{r_1 - r_0} \end{cases}$$

Dans cet exemple de réalisation du procédé selon l'invention, T0 est fixé à 0 et T1 à 64.

- Calculer un deuxième facteur de pondération $\lambda_d$ en fonction de la position du pixel au sein du cadre 804 délimitant le candidat d'oeil rouge 301 A validé, de façon à ce que $\lambda_d$ aille progressivement de 1, si le pixel est dans l'ellipse qui englobe la pupille détectée, à 0 si le pixel est à l'extérieur d'une ellipse plus grande ;
- Remplacer chaque composante C de la couleur du pixel par la moyenne pondérée de sa valeur d'origine et la valeur du gris :

$$c' = \lambda_r \lambda_d \times \gamma + (1 - \lambda_r \lambda_d) \times c$$

La figure 11 montre une image 12 similaire à celle de la figure 2, mais présentant des yeux 1000A et 1000B corrigés avec le procédé selon l'invention.

**Revendications**

1. Procédé (100) de détection (102) et de correction (104) automatiques d'au moins un oeil rouge (201) d'au moins un individu (200) visible sur une image initiale (10), ladite détection consistant notamment à distinguer une zone de peau correspondant au visage (202), une zone d'absence de peau correspondant au blanc de l'oeil (203) et à l'iris (805) et une zone de rouge correspondant à la pupille (204), le procédé comportant les étapes consistant à:

   - réduire (101) la taille de l'image initiale pour obtenir une image réduite (11) ;
   - détecter au moins un oeil rouge sur l'image réduite, par :

      - localisation (102A) d'au moins un candidat d'oeil rouge (301) et obtention des coordonnées (x ; y) correspondantes,
      - validation ou rejet (102B) du candidat d'oeil rouge en fonction de critères de taille (702), de forme (704) et de présence de peau à proximité moyenne (705) et réduite (706) dudit candidat ;

   - convertir (103), le cas échéant, les coordonnées du candidat d'oeil rouge validé à l'échelle de l'image initiale ;
   - corriger la rougeur du candidat d'oeil rouge validé en la remplaçant par une couleur appropriée pour obtenir une image finale (12),

   **caractérisé en ce que**

   - le critère de présence de peau à proximité moyenne du candidat d'oeil rouge utilise un premier modèle colorimétrique de peau vaste (MP1) déterminant les zones correspondant à de la peau, et **en ce que**
   - le critère de présence de peau à proximité réduite du candidat d'oeil rouge utilise un deuxième modèle colorimétrique de peau (MP2) restreint, obtenu par apprentissage des couleurs de la peau, déterminant le teint de la peau de l'individu.

2. Procédé de détection et de correction automatiques d'oeil rouge selon la revendication précédente, **caractérisé en ce que** le critère de forme, utilisé pour la détection d'au moins un oeil rouge, détermine le caractère circulaire du candidat d'oeil rouge en fonction de ses coordonnées.

3. Procédé de détection et de correction automatiques d'oeil rouge selon la revendication précédente, **caractérisé en ce que** le premier modèle de peau est utilisé à proximité moyenne de la pupille, dans une zone rectangulaire (801) représentant le visage de l'individu, ladite zone excluant, dans sa partie centrale, un rectangle (804) qui englobe la totalité de l'oeil rouge et dans lequel on ne cherche pas à détecter la présence de peau.

4. Procédé de détection et de correction automatiques d'oeil rouge selon **la revendication 3, caractérisé en ce que** le deuxième modèle de peau est appliqué dans le rectangle englobant la totalité de l'oeil rouge, et plus précisément dans une zone constituée d'une paire de triangles symétriques (802A ; 8028) par rapport au centre (803) de ladite pupille.

5. Procédé de détection et de correction automatiques d'oeil rouge selon la revendication précédente, **caractérisé en ce que** la paire de triangles, positionnés en périphérie de la pupille, pivote autour du centre de ladite pupille, jusqu'à atteindre une position où les dites paires de triangles contiennent une minorité de pixels de peau.

6. Procédé de détection et de correction automatiques d'oeil rouge selon l'une au moins des revendications 3 à **5**, **caractérisé en ce que** le deuxième modèle de peau est obtenu par la réalisation d'une moyenne pondérée des valeurs des pixels de peau contenus dans la zone rectangulaire représentant le visage de l'individu.

7. Procédé de détection et de correction automatiques d'oeil rouge selon l'une au moins des revendications **4** à **6,** **caractérisé en ce que** ladite correction, appliquée à chaque pixel du candidat validé une première fois, consiste notamment à :

   - valider (501) une deuxième fois la forme du candidat,
   - calculer (505) la distance entre chaque pixel et le centre de la pupille,
   - choisir (506) un niveau de gris de substitution ($\gamma$) pour chaque pixel,
   - appliquer (507) à chaque pixel du candidat validé le niveau de gris choisi.

8. Procédé de détection et de correction automatiques d'oeil rouge selon la revendication précédente, **caractérisé en ce que** le niveau de gris de substitution est choisi en fonction de la valeur des composantes verte (g) et bleue (b) de chaque pixel du candidat validé.

9. Procédé de détection et de correction automatiques d'oeil rouge selon l'une au moins des revendications précédentes, **caractérisé en ce que** le niveau de gris de substitution est choisi en fonction de la distance entre le pixel et le centre de la pupille.

10. Procédé de détection et de correction automatiques d'oeil rouge selon l'une au moins des revendications précédentes, **caractérisé en ce que** la détection d'au moins un oeil rouge est réalisée notamment en commençant par établir une carte de rougeur (201) de l'image considérée.

11. Procédé de détection et de correction automatiques d'oeil rouge selon l'une au moins des revendication **9** ou **10,** **caractérisé en ce que** la carte de rougeur établie se présente sous la forme d'une image en niveaux de gris sur laquelle la valeur attribuée à chaque pixel dépend des valeurs des composantes rouge, verte (g) et bleue(b) de l'image réduite, lesdites valeurs attribuées à chaque pixel étant alors égales à une valeur T répondant à l'équation : T = max (r - g,0).

12. Procédé de détection et de correction automatiques d'oeil rouge selon l'une au moins des revendications **9, 10** ou **11, caractérisé en ce que** la carte de rougeur établie est segmentée en régions rouges (R).

13. Procédé de détection et de correction automatiques d'oeil rouge selon la revendication précédente, **caractérisé en ce que** les régions rouges sont fusionnées entre elles si la distance qui les sépare n'excède pas trois pixels.

14. Procédé de détection et de correction automatiques d'oeil rouge selon l'une au moins des revendications **12** ou **13, caractérisé en ce que** les régions rouges, une fois localisées et fusionnées entre elles, constituent les candidats d'oeil rouge à valider ou rejeter ultérieurement.

15. Procédé de détection et de correction automatiques d'oeil rouge selon l'une au moins des revendications précédentes, **caractérisé en ce que** la validation de la forme des candidats d'oeil rouge est réalisée en calculant des moments invariants.

16. Procédé de détection et de correction automatiques d'oeil rouge selon l'une au moins des revendications précédentes, **caractérisé en ce que** les dimensions de l'image réduite sont choisies pour obtenir une taille d'environ quatre cent mille pixels, quelle que soit la taille de l'image initiale.

17. Procédé de détection et de correction automatiques d'oeil rouge selon la revendication précédente, **caractérisé en ce que** le critère de taille, utilisé pour la détection d'au moins un oeil rouge, détermine la taille du candidat d'oeil rouge en fonction de ses coordonnées.

**Claims**

1. A method (100) of automatic detection (102) and correction (104) of at least one visible red eye (201) on at least one individual (200) on an original image (10), whose detection consists of distinguishing an area of skin corresponding to the face (202), an area without skin corresponding to the white of the eye (203) and the iris (805), and a red area corresponding to the pupil (204), the method comprising the steps of:

   - reducing (101) the size of the original image to obtain a smaller image (I1);
   - detecting at least one red eye in the smaller image, by:

      - locating (102A) at least one red eye candidate (301) and obtaining the corresponding coordinates (x; y),
      - validating or rejecting (102B) the red eye candidate based on the criteria of size (702), shape (704), and presence of skin in the general (705) and immediate (706) vicinity of the candidate;

   - converting (103), if necessary, the coordinates of the validated red eye candidate to the scale of the original image;
   - correcting the redness of the validated red eye candidate by replacing it with a suitable color to obtain a final image (12),

   **characterized in that**

   - the criterion having to do with the presence of skin in the general vicinity of the red eye candidate uses a first extensive colorimetric skin model (MP1) determining the areas corresponding to skin, **and in that**
   - the criterion having to do with the presence of skin in the immediate vicinity of the red eye candidate uses a second limited colorimetric skin model (MP2), obtained by learning the colors of the skin, determining the color of the individual's skin.

2. A method of automatic red eye detection and correction according to the previous claim, **characterized in that** the shape criterion, used for the detection of at least one red eye, determines the circular nature of the red eye candidate based on its coordinates.

3. A method of automatic red eye detection and correction according to the previous claim, **characterized in that** the first colorimetric skin model is used in the general vicinity of the pupil, in a rectangular area (801) representing the individual's face, this area excluding, in its central section, a rectangle (804) that encompasses the entire red eye and in which there is no attempt to detect the presence of skin.

4. A method of automatic red eye detection and correction according **to claim 3, characterized in that** the second colorimetric skin model is applied in a rectangle encompassing the entire red eye, and more precisely in an area comprised of a pair of symmetrical triangles (802A; 802B) with respect to the center (803) of the pupil.

5. A method of automatic red eye detection and correction according to the previous claim, **characterized in that** the pair of triangles, positioned at the periphery of the pupil, rotates around the center of the pupil until reaching a position where said pair of triangles contain a minority of skin pixels.

6. A method of automatic red eye detection and correction according to at least one of claims **3** to **5**, **characterized in that** the second colorimetric skin model is obtained by taking a weighted average of the values of the skin pixels contained in the rectangular area representing the individual's face.

7. A method of automatic red eye detection and correction according to at least one of claims **4** to **6, characterized in that** said correction, applied a first time to each pixel of the validated candidate, specifically consists of:

- validating (501) the candidate's shape a second time,
- calculating (505) the distance between each pixel and the center of the pupil,
- choosing (506) a grayscale substitution (γ) for each pixel,
- applying (507) the chosen grayscale to each pixel in the validated candidate.

**8.** A method of automatic red eye detection and correction according to the previous claim, **characterized in that** the grayscale substitution is chosen based on the value of the green (g) and blue (b) components of each pixel of the validated candidate.

**9.** A method of automatic red eye detection and correction according to at least one of the previous claims, **characterized in that** the grayscale substitution is chosen based on the distance between the pixel and the center of the pupil.

**10.** A method of automatic red eye detection and correction according to at least one of the previous claims, **characterized in that** at least one red eye is detected by starting with a redness map (201) for the image in question.

**11.** A method of automatic red eye detection and correction according to at least one of claims **9** or **10, characterized in that** the established redness map is presented in the form of a grayscale image in which the value assigned to each pixel depends on the values of the red, green (g), and blue (b) components of the smaller image, said values assigned to each pixel then being equal to a value T based on the equation: $T = \max(r - g, 0)$.

**12.** A method of automatic red eye detection and correction according to at least one of claims **9, 10** or **11, characterized in that** the established redness map is segmented into red regions (R).

**13.** A method of automatic red eye detection and correction according to the previous claim, **characterized in that** the red regions are merged together if the difference between them does not exceed three pixels.

**14.** A method of automatic red eye detection and correction according to at least one of claims **12** or **13, characterized in that** the red regions, once located and merged together, constitute the red eye candidates to be validated or rejected later.

**15.** A method of automatic red eye detection and correction according to at least one of the previous claims, **characterized in that** the shape of the red eye candidates is validated by calculated invariant moments.

**16.** A method of automatic red eye detection and correction according to at least one of the previous claims, **characterized in that** the dimensions of the smaller image are chosen to obtain a size of around four hundred thousand pixels, regardless of the size of the original image.

**17.** A method of automatic red eye detection and correction according to the previous claim, **characterized in that** the size criterion, used for the detection of at least one red eye, determines the size of the red eye candidate based on its coordinates.


**Patentansprüche**

**1.** Verfahren (100) zur automatischen Erfassung (102) und Korrektur (104) zumindest eines roten Auges (201) zumindest eines Individuums (200), das auf einem ursprünglichen Bild (10) zu sehen ist, wobei die besagte Erfassung vor allem darin besteht, eine Hautzone zu unterscheiden, die dem Gesicht (202) entspricht, eine Zone ohne Haut, die wem Weiß des Auges (203) und der Iris (805) entspricht, und eine Rotzone, die der Pupille (204) entspricht, und das Verfahren die folgenden Schritte enthält, die darin bestehen:

- die Größe des ursprünglichen Bildes zu verringern (101), um ein reduziertes Bild (11) zu erhalten;
- zumindest ein rotes Auge auf dem verringerten Bild zu erfassen, durch:
- die Lokalisierung (102A) zumindest eines Rotaugenkandidaten (301) und den Erhalt der entsprechenden Koordinaten (x; y),
- die Bestätigung oder die Abweisung (102B) des Rotaugenkandidaten je nach den Kriterien der Größe (702), der Form (704) und dem Vorhandensein von Haut in der mittleren (705) und reduzierten (706) Nähe des besagten Kandidaten;

- die Koordinaten des bestätigten Rotaugenkandidaten im konkreten Fall in den Maßstab des ursprünglichen Bildes umzuwandeln;
- die Röte des bestätigten Rotaugenkandidaten zu korrigieren, indem man sie durch eine geeignete Farbe ersetzt, um ein endgültiges Bild (12) zu erhalten,

**dadurch gekennzeichnet, dass**

- das Kriterium für das Vorhandensein von Haut in der mittleren Nähe des Rotaugenkandidaten ein erstes ausgedehntes kolorimetrisches Hautmodell (MP1) verwendet, das die Zonen festlegt, die Haut entsprechen, und **dadurch**, dass
- das Kriterium für das Vorhandensein von Haut in der reduzierten Nähe des Rotaugenkandidaten ein zweites reduziertes kolorimetrisches Hautmodell (MP2) verwendet, das man durch Einlernen der Hautfarben erhält, die den Teint der Haut des Individuums festlegt.

2. Verfahren zur automatischen Erfassung und Korrektur roter Augen nach dem vorherigen Anspruch, **dadurch gekennzeichnet, dass** das Formkriterium, das zur Erfassung zumindest eines roten Auges verwendet wird, die kreisförmige Beschaffenheit des Rotaugenkandidaten in Abhängigkeit von seinen Koordinaten festlegt.

3. Verfahren zur automatischen Erfassung und Korrektur roter Augen nach dem vorherigen Anspruch, **dadurch gekennzeichnet, dass** das erste Hautmodell in der mittleren Nähe der Pupille verwendet wird, in einer rechteckigen (801) Zone, die das Gesicht des Individuums darstellt, wobei die besagte Zone in ihrem mittleren Abschnitt ein Rechteck (804) ausschließt, das die Gesamtheit des roten Auges umfasst, und in dem man nicht versucht, das Vorhandensein von Haut zu erfassen.

4. Verfahren zur automatischen Erfassung und Korrektur roter Augen nach Anspruch 3, **dadurch gekennzeichnet, dass** das zweite Hautmodell im Rechteck angewandt wird, das die Gesamtheit des roten Auges umfasst, und genauer gesagt in einer Zone, die aus einem Paar von symmetrischen Dreiecken (802A; 802B) in Bezug auf die Mitte (803) der besagten Pupille gebildet wird.

5. Verfahren zur automatischen Erfassung und Korrektur roter Augen nach dem vorherigen Anspruch, **dadurch gekennzeichnet, dass** das Paar der Dreiecke, die an der Peripherie der Pupille positioniert sind, solange rund um die Mitte der besagten Pupille schwenkt, bis es eine Position erreicht, in der die besagten Dreieckspaare eine Minderheit an Hautpixeln enthalten.

6. Verfahren zur automatischen Erfassung und Korrektur roter Augen nach zumindest einem der Ansprüche 3 bis 5, **dadurch gekennzeichnet, dass** man das zweite Hautmodell durch die Erstellung eines gewichteten Mittelwerts der Hautpixelwerte erhält, die in der rechteckigen Zone enthalten sind, die das Gesicht des Individuums darstellt.

7. Verfahren zur automatischen Erfassung und Korrektur roter Augen nach zumindest einem der Ansprüche 4 bis 6, **dadurch gekennzeichnet, dass** die besagte Korrektur, die auf jedes Pixel des bestätigten Kandidaten ein erstes Mal angewandt wird, vor allem darin besteht:

- die Form des Kandidaten ein zweites Mal zu bestätigen (501),
- den Abstand zwischen jedem Pixel und der Mitte der Pupille zu berechnen (505),
- eine Graustufe (y) als Substitution für jedes Pixel auszuwählen,
- auf jedes Pixel des bestätigten Kandidaten die gewählte Graustufe anzuwenden (507).

8. Verfahren zur automatischen Erfassung und Korrektur roter Augen nach dem vorherigen Anspruch, **dadurch gekennzeichnet, dass** die Graustufe zur Substitution in Abhängigkeit vom Wert der Grünanteile (g) und der Blauanteile (b) eines jeden Pixels des bestätigten Kandidaten ausgewählt wird.

9. Verfahren zur automatischen Erfassung und Korrektur roter Augen nach zumindest einem der vorherigen Ansprüche, **dadurch gekennzeichnet, dass** die Graustufe zur Substitution in Abhängigkeit vom Abstand zwischen dem Pixel und der Mitte der Pupille ausgewählt wird.

10. Verfahren zur automatischen Erfassung und Korrektur roter Augen nach zumindest einem der vorherigen Ansprüche, **dadurch gekennzeichnet, dass** die Erfassung zumindest eines roten Auges vor allem **dadurch** erfolgt, dass man damit beginnt, eine Rötekarte (201) des betrachteten Bildes aufzustellen.

**11.** Verfahren zur automatischen Erfassung und Korrektur roter Augen nach zumindest einem der Ansprüche 9 oder 10, **dadurch gekennzeichnet, dass** sich die erstellte Rötetabelle in Form eines Bildes in Graustufen darstellt, auf dem der Wert, der jedem Pixel zugeordnet wird, von den Werten der Rotanteile, der Grün- (g) und der Blauanteile (b) des reduzierten Bildes abhängt, wobei die besagten Werte, die jedem Pixel zugeordnet werden, gleich einem Wert T sind, der aus folgender Gleichung hervorgeht: T = max (r - g,0).

**12.** Verfahren zur automatischen Erfassung und Korrektur roter Augen nach zumindest einem der Ansprüche 9, 10 oder 11, **dadurch gekennzeichnet, dass** die erstellte Rötetabelle in rote Regionen (R) segmentiert wird.

**13.** Verfahren zur automatischen Erfassung und Korrektur roter Augen nach dem vorherigen Anspruch, **dadurch gekennzeichnet, dass** die roten Regionen miteinander fusioniert werden, wenn der Abstand zwischen ihnen drei Pixel nicht übersteigt.

**14.** Verfahren zur automatischen Erfassung und Korrektur roter Augen nach zumindest einem der Ansprüche 12 oder 13, **dadurch gekennzeichnet, dass** die roten Regionen, sobald sie lokalisiert und miteinander fusioniert sind, die Rotaugenkandidaten bilden, die es später zu bestätigen oder abzuweisen gilt.

**15.** Verfahren zur automatischen Erfassung und Korrektur roter Augen nach zumindest einer der vorherigen Ansprüche, **dadurch gekennzeichnet, dass** die Bestätigung der Form der Rotaugenkandidaten durch die Berechnung unveränderlicher Momente erfolgt.

**16.** Verfahren zur automatischen Erfassung und Korrektur roter Augen nach zumindest einem der vorherigen Ansprüche, **dadurch gekennzeichnet, dass** die Abmessungen des verringerten Bildes so ausgewählt werden, um unabhängig von der Größe des ursprünglichen Bildes eine Größe von etwa vierhunderttausend Pixel zu erhalten.

**17.** Verfahren zur automatischen Erfassung und Korrektur roter Augen nach dem vorherigen Anspruch, **dadurch gekennzeichnet, dass** das Kriterium der Größe, das zur Erfassung zumindest eines roten Auges verwendet wird, die Größe des Rotaugenkandidaten in Abhängigkeit von seinen Koordinaten bestimmt.

$I_0$

Réduction de la taille — 101

$I_1$

102A

Localisation de candidats d'oeil rouge — 102

102B

Validation de candidats d'oeil rouge

**Fig. 1**

Conversion à l'échelle de $I_0$ — 103

Correction — 104

$I_2$

200

$I_0$

201B  204B  204A  201A

202

203B  203A

**Fig. 2**

**Fig. 3**

**Fig. 4**

501

2<sup>eme</sup> validation de forme d'oeil

502

la forme
est-elle circulaire
?

Non

Oui

503

Sélection d'un pixel du cadre

504

P1
est-il rouge
?

Non

Oui

505

Calcul de le distance
entre le centre de l'oeil et P1

506

Choix d'une couleur naturelle

Remplacement de P1

507

Y a-t-il
d'autres pixels à
traiter ?

Non

508

Oui

104

I₂

**Fig. 5**

**601**

Sélection d'un pixel de la carte

**602** — Le pixel appartient-il à une région rouge ?
— Non

**603**
Oui ↓

Sélection d'un pixel proche

**604** — Le pixel appartient-il à une autre région rouge ?
— Non

Oui ↓
**605**

Fusion des 2 régions

**606** — Y a-t-il d'autres pixels voisins ?
— Non

Oui ↓

**403**

Y a-t-il d'autres pixels dans l'image ?
— Non

**607** — Oui

# Fig. 6

701

Sélection d'un candidat

702
Le
candidat
est-il petit ?

Non

Oui

703
Y a-t-il
beaucoup de rouge
autour ?

No

Oui

704
Le candidat
est-il
un cercle ?

Non

Oui

705
Y a-t-il
de la peau
autour ?

Non

Oui

706
Y a-t-il
autre chose que de la
peau autour ?

Non

707
Rejet du candidat

Oui

708
Y a-t-il
d'autres
candidats ?

Non

Oui

102B

**Fig. 7**

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 040119851 A1
- CA 2460179
- FR 13724
- EP 1734475 A
- US 2004228542 A1

**Littérature non-brevet citée dans la description**

- AUTOMATED IN-CAMERA DETECTION OF FLASH-EYE DEFECTS. **CORCORAN P et al.** IEEE TRANSACTIONS ON CONSUMER EMECTRONICS. IEEE SERVICE CENTER, Février 2005, vol. 51, 11-17
- **R.-L. HSU ; M. ABDEL-MOTTALEB ; A. K. JAIN.** *Face Détection in Color Images - in IEEE Transactions,* 2002, vol. 24, 696-706